# EUROPÄISCHE PATENTSCHRIFT

(11) **EP 1 394 441 B1**
(45) Veröffentlichungstag und Bekanntmachung des Hinweises auf die Patenterteilung: **27.07.2011**
(21) Anmeldenummer: 03011689.1
(22) Anmeldetag: 23.05.2003
(51) Int. Cl.: F16H 15/38, B60K 17/34, B60K 17/354

(54) **Toroidgetriebe**
Toroidal variable transmission
Transmission toroidale

(30) Priorität: 23.08.2002 DE 10238662
(43) Veröffentlichungstag der Anmeldung: 03.03.2004
(73) Patentinhaber: AUDI AG, 85045 Ingolstadt (DE)
(72) Erfinder: Märkl, Johann, 85128 Nassenfels (DE)
(74) Vertreter: Asch, Konrad

(56) Entgegenhaltungen:
- AT-B- 96 047
- DE-A1- 4 240 724
- JP-A- 6 174 032
- JP-A- 8 312 745
- JP-A- 2002 206 609

## Beschreibung

Die Erfindung betrifft ein Toroidgetriebe, insbesondere für allradgetriebene Kraftfahrzeuge, gemäß dem Oberbegriff des Patentanspruches 1.

Ein derartiges Toroidgetriebe beschreibt beispielsweise die EP 1 071 890 B1, bei der zwei Variatorsätze mit je einer Antriebsscheibe, einer Abtriebsscheibe und dazwischen befindlichen, das Antriebsmoment übertragenden Reibscheiben vorgesehen sind. Die Antriebswelle treibt die beiden axial außen liegenden Antriebsscheiben an, während die beiden innenliegenden und starr miteinander gekoppelten Abtriebsscheiben mit einem gemeinsamen Abtriebselement bzw. Abtriebs-Zahnrad verbunden sind. Die Antriebsleistung mit stufenlosem Übersetzungsverhältnis verläuft gleichteilig 50:50 über die beiden Variatorsätze.

Aufgabe der Erfindung ist es, ein Toroidgetriebe der gattungsgemäßen Art vorzuschlagen, dass hinsichtlich seiner baulichen Anordnung besonders günstig und für den Antrieb von Kraftfahrzeugen vorteilhaft verwendbar ist.

Diese Aufgabe wird erfindungsgemäß mit den kennzeichnenden Merkmalen des Patentanspruches 1 gelöst. Vorteilhafte Weiterbildungen der Erfindung sind in den weiteren Patentansprüchen angeführt.

Erfindungsgemäß wird vorgeschlagen, dass die beiden Variatorsätze unterschiedliche mittlere Durchmesser aufweisen. Damit können zum Beispiel bauliche Zwänge ausgeglichen werden, in dem der "kleinere" Variatorsatz und der "größere" Variatorsatz entsprechend angeordnet werden. Nach einer vorteilhaften Ausgestaltung treiben die Abtriebsscheiben mit separaten Antriebselementen jeweils die Räder einer Achse des Kraftfahrzeuges an. Daraus resultieren größere antriebstechnische Freiheitsgrade hinsichtlich der baulichen Anordnung und der getriebetechnischen Auslegung des Toroidgetriebes.

Besonders vorteilhaft können dabei die beiden Variatorsätze unterschiedliche mittlere Durchmesser zur Erzielung unterschiedlicher Antriebsleistungen aufweisen.

Dabei können ferner auch die unterschiedlichen Antriebsleistungen entsprechend der unterschiedlichen Achslastverteilung des Kraftfahrzeuges ausgelegt sein, so dass insgesamt gesehen eine gleichmäßige Belastung der Variatorsätze und eine gezielt vorgegebene Antriebsleistungsverteilung bei einem Allradantrieb des Kraftfahrzeuges vorliegt.

Des weiteren kann das Toroidgetriebe einen sogenannten Mittenabtrieb aufweisen, bei dem die beiden axial äußeren Antriebsscheiben der Variatorsätze über die Reibräder auf die beiden innenliegenden Abtriebsscheiben und deren Abtriebselemente treiben (ähnlich dem vorbeschriebenen Stand der Technik), oder es kann bei einem Innenantrieb der jeweilige, separate Abtrieb axial außen liegen. Beide Anordnungen ergeben abhängig von den baulichen Gegebenheiten (Anordnung der Antriebsaggregate) und den vorliegenden Achslastverteilungen spezifische Vorteile, die von Fall zu Fall entsprechend abzuwägen sind.

So zeigt es sich bei einem Kraftfahrzeug mit frontseitigem Längseinbau des aus Antriebsmaschine und Geschwindigkeits-Wechselgetriebe bestehendem Antriebsaggregates als besonders vorteilhaft gezeigt, wenn der "kleinere" Variatorsatz hinter dem "größeren Variatorsatz positioniert ist. Aufgrund der daraus resultierenden geringeren Einbaumaße im Bereich der Stirnwand des Kraftfahrzeuges ergeben sich Vorteile in der Anordnung des Antriebsaggregates, auch mit Hinblick auf das Verformungsverhalten bei Frontalkollisionen des Kraftfahrzeuges.

Schließlich kann der "größere" Variatorsatz bzw. dessen Abtriebselement diejenige Achse des Kraftfahrzeuges antreiben, der das größere Moment zugeordnet ist. Insbesondere bei einem Innenantrieb der Variatorsätze ergibt dies baulich kurze und robuste Antriebswellen zur Vorderachse als auch zur Hinterachse des Kraftfahrzeuges mit entsprechend günstigen Fertigungskosten und Gewichtsvorteilen.

Ein Ausführungsbeispiel der Erfindung ist im Folgenden mit weiteren Einzelheiten näher beschrieben.

Die anliegende Zeichnung zeigt ein Blockschaltbild eines Teil eines Antriebsaggregates für Kraftfahrzeuge mit Allradantrieb bildenden Toroidgetriebes mit separatem Abtrieb zu den Vorderrädern und den Hinterrädern des Kraftfahrzeuges.

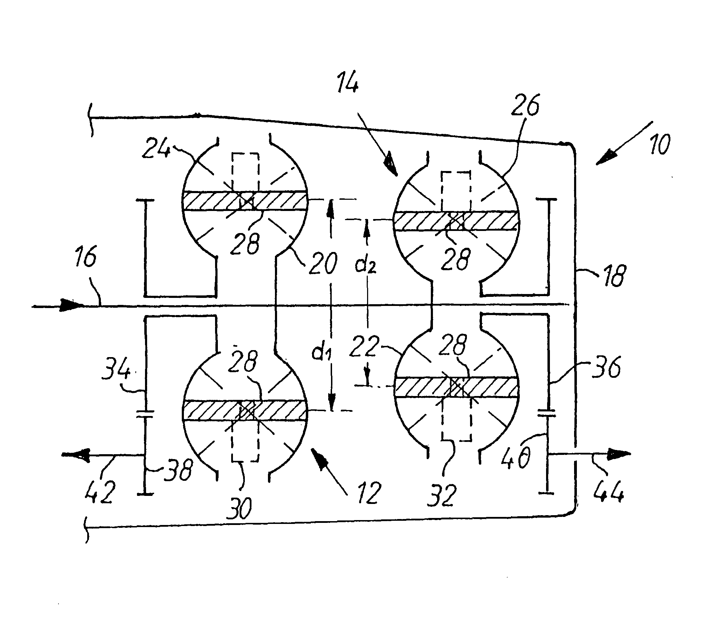

In der Zeichnung ist mit 10 ein Toroidgetriebe bezeichnet, das in ein Geschwindigkeits-Wechselgetriebe eines Kraftfahrzeuges integriert ist und das mit einer Brennkraftmaschine zu einem Antriebsaggregat ausgebildet und frontseitig im Längseinbau in ein Kraftfahrzeug mit permanentem Allradantrieb eingebaut ist. Soweit nicht beschrieben, können die relevanten Antriebselemente in üblicher Bauart ausgeführt sein. Kupplungen, Differenziale, etc. sind nicht dargestellt, da sie nicht Gegenstand der Erfindung sind.

Das Toroidgetriebe 10 zur stufenlosen Übersetzungssteuerung weist im wesentlichen einen ersten Variatorsatz 12 und einen zweiten Variatorsatz 14 auf, die auf einer Eingangswelle 16 drehbar in einem Getriebegehäuse 18 gelagert sind.

Ein jeder Variatorsatz 12, 14 setzt sich aus einer konkav ausgeführten Antriebsscheibe 20, 22, einer Abtriebsscheibe 24, 26 und dazwischen befindlichen, einheitlich mit 28 bezeichneten Reibscheiben zusammen. Die Reibscheiben 28 sind drehbar und zur Übersetzungssteuerung schwenkbar (vgl. gestrichelt eingezeichnete Positionen) zwischen den Antriebsscheiben 20, 22 und den Abtriebsscheiben 24, 26 in nicht dargestellter Weise auf ortsfesten Trägern 30, 32 angeordnet und zur Erzielung einer schlupffreien Antriebsübertragung entsprechend vorgespannt.

Die Antriebsscheiben 20, 22 sind axial unmittelbar einander benachbart und drehfest mit der Eingangswelle 16 verbunden.

Andererseits sind die axial äußeren Abtriebsscheiben 24, 26 auf der Eingangswelle 16 drehbar gelagert und mit benachbarten Abtriebselementen bzw. Zahnrädern 34, 36 fest verbunden.

Die Zahnräder 34, 36 wiederum kämmen mit Zahnrädern 38, 40, die auf Abtriebswellen 42, 44 des Toroidgetriebes 10 angeordnet sind.

Die Abtriebswelle 42 treibt in nicht dargestellter Weise das in das Wechselgetriebe integrierte Differenzial für die Vorderräder des Kraftfahrzeuges an, während die Abtriebswelle 44 in ebenfalls nicht dargestellter Weise über eine Kardanwelle das hintere Achsdifferenzial des Kraftfahrzeuges antreibt.

Wie aus der Zeichnung ohne weiteres ersichtlicht ist, ist der linke, in der Anordnung im Kraftfahrzeug vordere Variatorsatz 12 des Toroidgetriebes 10 größer ausgeführt bzw. weist einen größeren wirksamen Durchmesser d₁ der Reibscheiben 28 auf, als der hintere Variatorsatz 14 mit dem wirksamen Durchmesser d₂ (jeweils betrachtet in der Übersetzungsstellung von Antriebsscheibe zu Abtriebsscheibe 1:1).

Der Durchmesserunterschied ist dabei so gewählt, dass dessen Differenz der Differenz der Achslastverteilung des Kraftfahrzeuges entspricht; z.B. ist bei einer Achslastverteilung von Vorderachse zu Hinterachse von 60 zu 40 auch das Durchmesserverhältnis d₁ zu d₂ 60 zu 40. Daraus resultiert, dass über den vorderen Variatorsatz 12 60% der Antriebsleistung und über den hinteren Variatorsatz 14 40% der möglichen Antriebsleistung des Toroidgetriebes 10 übertragbar sind, wobei das Getriebe 10 aber im relevanten hinteren Bereich schmäler baut als Toroidgetriebe mit vergleichbarer Gesamtleistungsübertragung.

Anstelle des gezeichneten Innenantriebs kann auch ein sogenannter Mittenabtrieb des Toroidgetriebes 10 ausgeführt sein, wobei dann die axial äußeren Scheiben die Antriebsscheiben sind und entsprechend mit der Eingangswelle 16 drehfest verbunden sind. Die mittleren Abtriebsscheiben tragen dann die angeführten Abtriebselemente bzw. Zahnräder 38, 40, die dann mit den Abtriebswellen 42, 44 verbunden sind.

Dabei kann bei einer anderen Achslastverteilung des Kraftfahrzeuges auch der vordere, größere Variatorsatz 12 auf die hinteren Räder des Kraftfahrzeuges treiben und umgekehrt der hintere Variatorsatz 14 auf die Vorderräder.

## Patentansprüche

1. Toroidgetriebe, insbesondere für allradgetriebene Kraftfahrzeuge, mit einer Antriebswelle, zwei benachbart zueinander angeordneten Variatorsätzen mit jeweils einer Antriebsscheibe, einer Abtriebsscheibe und dazwischen befindlichen, auf je einem Träger schwenkbar angeordneten Reibscheiben, sowie mit Abtriebselementen zum Antrieb der Räder des Kraftfahrzeuges, wobei die Antriebswelle mit beiden Antriebsscheiben trieblich verbunden ist, **dadurch gekennzeichnet, dass** die beiden Variatorsätze (12, 14) unterschiedliche mittlere Durchmesser (d₁, d₂) aufweisen.

2. Toroidgetriebe nach Anspruch 1, **dadurch gekennzeichnet, dass** die Abtriebsscheiben (24, 26) mit separaten Abtriebselementen (34, 36) jeweils die Räder einer Achse des Kraftfahrzeuges antreiben.

3. Toroidgetriebe nach den Ansprüchen 1 und 2, **dadurch gekennzeichnet, dass** die unterschiedlichen Durchmesser (d₁, d₂) entsprechend der unterschiedlichen Achslastverteilung des Kraftfahrzeuges ausgelegt sind.

4. Toroidgetriebe nach den Ansprüchen 1 bis 3, **dadurch gekennzeichnet, dass** die Antriebswelle (16) die beiden axial äußeren Antriebsscheiben antreibt und dass die Abtriebselemente (34, 36) an den beiden axial inneren Abtriebsscheiben angeordnet sind.

5. Toroidgetriebe nach den Ansprüchen 1 bis 3, **dadurch gekennzeichnet, dass** die Antriebswelle (16) die beiden axial innenliegenden Antriebsscheiben (20, 22) antreibt und dass die Abtriebselemente (34, 36) an den beiden axial äußeren Abtriebsscheiben (24, 26) angeordnet sind.

6. Toroidgetriebe nach einem oder mehreren der Ansprüche 1 bis 5, **dadurch gekennzeichnet, dass** bei einem Kraftfahrzeug mit frontseitigem Längseinbau des aus Antriebsmaschine und Geschwindigkeits-Wechselgetriebe bestehendem Antriebsaggregates der kleinere Variatorsatz (14) hinter dem größeren Variatorsatz (12) positioniert ist.

7. Toroidgetriebe nach Anspruch 6, **dadurch gekennzeichnet, dass** der größere Variatorsatz (12) bzw. dessen Abtriebselement (34) diejenige Achse des Kraftfahrzeuges antreibt, der das größere Moment zugeordnet ist.

## Claims

1. Toroidal drive, in particular for four-wheel-drive motor vehicles, comprising a drive shaft, two variable-speed gear sets arranged adjacent to one another, each having a drive disc, a driven disc, and friction discs which are located between said drive disc and said driven disc and are each arranged pivotably on a carrier, and also comprising driven members for driving the wheels of the motor vehicle, the drive shaft being in a driving connection with the two drive discs, **characterised in that** the two variable-speed gear sets (12, 14) are of different average diameters (d₁, d₂).

2. Toroidal drive according to claim 1, **characterised in that** the driven discs (24, 26) each drive the wheels of one axle of the motor vehicle with separate driven members (34, 36).

3. Toroidal drive according to claims 1 and 2, **characterised in that** the different diameters (d₁, d₂) are set in accordance with the different axle load distribution of the motor vehicle.

4. Toroidal drive according to claims 1 to 3, **characterised in that** the drive shaft (16) drives the two axially outer drive discs, and **in that** the driven members (34, 36) are arranged on the two axially inner driven discs.

5. Toroidal drive according to claims 1 to 3, **characterised in that** the drive shaft (16) drives the two axially inner drive discs (20, 22), and **in that** the driven members (34, 36) are arranged on the two axially outer driven discs (24, 26).

6. Toroidal drive according to one or more of claims 1 to 5, **characterised in that**, in a motor vehicle having front longitudinal installation of the drive unit consisting of the drive motor and speed-change gear, the smaller variable-speed gear set (14) is positioned behind the larger variable-speed gear set (12).

7. Toroidal drive according to claim 6, **characterised in that** the larger variable-speed gear set (12) or the drive member (34) thereof drives the axle of the motor vehicle with which the greater torque is associated.

## Revendications

1. Transmission toroïdale, en particulier pour véhicules automobiles à quatre roues motrices, comprenant un arbre moteur, deux jeux de variateurs disposés au voisinage l'un de l'autre avec, respectivement, un disque moteur, un disque de sortie et des disques de friction disposés entre eux et montés en pivotement sur un support respectif, ainsi que des éléments de sortie pour entraîner les roues du véhicule automobile, l'arbre moteur étant relié aux deux disques moteurs de façon à être entraîné, **caractérisée en ce que** les deux jeux de variateurs (12, 14) présentent différents diamètres moyens (d₁, d₂).

2. Transmission toroïdale selon la revendication 1, **caractérisée en ce que** les disques de sortie (24, 26) avec des éléments de sortie séparés (34, 36) entraînent respectivement les roues d'un essieu du véhicule automobile.

3. Transmission toroïdale selon les revendications 1 et 2, **caractérisée en ce que** les différents diamètres (d₁, d₂) sont dimensionnés en fonction de la différence de distribution de charge d'essieu du véhicule automobile.

4. Transmission toroïdale selon les revendications 1 à 3, **caractérisée en ce que** l'arbre moteur (16) entraîne les deux disques moteurs axialement extérieurs et **en ce que** les éléments de sortie (34, 36) sont disposés sur les deux disques de sortie axialement intérieurs.

5. Transmission toroïdale selon les revendications 1 à 3, **caractérisée en ce que** l'arbre moteur (16) entraîne les deux disques moteurs (20, 22) situés axialement à l'intérieur et **en ce que** les éléments de sortie (34, 36) sont disposés sur les deux disques de sortie (24, 26) axialement extérieurs.

6. Transmission toroïdale selon une ou plusieurs des revendications 1 à 5, **caractérisée en ce que**, dans le cas d'un véhicule automobile auquel est incorporé longitudinalement, à l'avant, le groupe moteur constitué d'un moteur d'entraînement et d'une transmission à changement de vitesse, le plus petit jeu de variateurs (14) est positionné derrière le jeu de variateurs plus grand (12).

7. Transmission toroïdale selon la revendication 6, **caractérisée en ce que** le plus grand jeu de variateurs (12) ou son élément de sortie (34) entraîne l'essieu du véhicule automobile auquel est affecté le plus grand couple.
